(19) Europäisches Patentamt
European Patent Office
Office européen des brevets

(11) **EP 4 288 311 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **22711156.4**

(22) Anmeldetag: **21.01.2022**

(51) Internationale Patentklassifikation (IPC):
*B60T 8/17* *(2006.01)*      *B60T 8/175* *(2006.01)*
*B60T 8/1755* *(2006.01)*      *B60W 30/02* *(2012.01)*
*B60W 30/18* *(2012.01)*

(52) Gemeinsame Patentklassifikation (CPC):
**B60T 8/1708; B60T 8/175; B60T 8/1755;**
**B60W 30/02; B60W 30/18145; B60W 30/18172;**
B60T 2260/08; B60T 2270/303

(86) Internationale Anmeldenummer:
**PCT/EP2022/051381**

(87) Internationale Veröffentlichungsnummer:
**WO 2022/167234 (11.08.2022 Gazette 2022/32)**

(54) **VERFAHREN ZUM BETREIBEN EINES STEUERUNGSSYSTEMS EINES FAHRZEUGS MIT LENKBREMSFUNKTION UND ANTRIEBSSCHLUPFREGELUNG**

METHOD FOR OPERATING A CONTROL SYSTEM OF A VEHICLE WITH A STEERING BRAKE FUNCTION AND TRACTION CONTROL SYSTEM

PROCÉDÉ POUR FAIRE FONCTIONNER UN SYSTÈME DE COMMANDE D'UN VÉHICULE À FONCTION DE FREINAGE DE DIRECTION ET RÉGULATION ANTIPATINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2021 DE 102021102575**

(43) Veröffentlichungstag der Anmeldung:
**13.12.2023 Patentblatt 2023/50**

(73) Patentinhaber: **KNORR-BREMSE Systeme für Nutzfahrzeuge GmbH**
**80809 München (DE)**

(72) Erfinder:
• LEIBBRAND, Jonas
  **75223 Niefern-Öschelbronn (DE)**
• ZIEGLER, Andreas
  **71287 Weissach (DE)**

(56) Entgegenhaltungen:
**DE-B3- 102014 013 756      DE-C1- 10 029 819**
**GB-A- 2 412 100**

**Beschreibung**

Die Erfindung betrifft ein Verfahren zum Betreiben eines Steuerungssystems eines Fahrzeugs gemäß dem Oberbegriff von Anspruch 1 sowie ein Fahrzeug, insbesondere ein Zugfahrzeug einer Zugfahrzeug-Anhänger-Kombination mit einem Steuerungssystem, welches durch ein solches Verfahren gesteuert ist, gemäß Anspruch 11.

Aus dem Stand der Technik sind Steuerungssysteme von Fahrzeugen mit einer Antriebsschlupfregelung (ASR) bekannt, bei denen der Antriebsschlupf von Rädern einer angetriebenen Achse auf einen zulässigen Antriebsschlupf geregelt wird, falls wenigstens eines der angetriebenen Räder einen den zulässigen Antriebsschlupf überschreitenden Antriebsschlupf aufweist. Eine solche Antriebsschlupfregelung (ASR) kann durch einen Eingriff in eine Bremssteuerung einer Bremseinrichtung des Fahrzeugs und einen Eingriff in die Antriebssteuerung eines Antriebsmotors des Fahrzeugs die Drehzahl angetriebener Räder gezielt reduzieren, um einen unzulässig hohen Antriebsschlupf zu vermindern.

Daneben sind Steuerungssysteme von Fahrzeugen mit einer Lenkbremsfunktion bekannt, mit welcher alleine durch gezieltes Einbremsen von Rädern eine Lenkeffekt auf das Fahrzeug ausgeübt werden kann. Weiterhin sind Differentialgetriebe an angetriebenen Achsen, sog. Achsdifferentiale bekannt, welches für den Ausgleich der Drehzahlen zwischen den beiden Rädern der angetriebenen Achse sorgt. Ein gattungsgemäßes Verfahren ist aus DE 100 29 819 C1 bekannt.

Aufgabe dieser Erfindung ist es, ein Verfahren zum Betreiben eines Steuerungssystems eines Fahrzeugs mit Antriebsschlupfregelung und mit Lenkbremsfunktion zur Verfügung zu stellen, bei welchem der durch die Lenkbremsfunktion bewirkte Lenkeffekt möglichst groß ist. Weiterhin soll auch ein Fahrzeug mit einem Steuerungssystem zur Verfügung gestellt werden, welches nach einem solchen Verfahren betrieben wird.

Diese Aufgabe wird erfindungsgemäß durch die Merkmale der Ansprüche 1 und 11 gelöst.


Offenbarung der Erfindung

Die Erfindung geht von der Erkenntnis aus, dass falls die Lenkbremsfunktion aktiv ist oder aktiviert worden ist, damit das Fahrzeug eine Kurvenfahrt ausführt, und hierzu das kurveninnere Antriebsrad nicht aber das kurvenäußere Antriebsrad der angetriebenen Achse abgebremst wird, durch das (nicht gesperrte) Differentialgetriebe an der angetriebenen Achse eine Beschleunigung des kurvenäußeren Rades herbeigeführt wird, welches dann einen erhöhten und unter Umständen unzulässig hohen Antriebsschlupf aufweist. Alleine mit dem Ziel, mit Hilfe der Lenkbremsfunktion möglichst kleine Kurvenradien erzielen zu können, ist dieses Verhalten jedoch wünschenswert. Die ASR-Regelung würde dann aber durch einen Eingriff in die Bremssteuerung der Bremseinrichtung das kurvenäußere Antriebsrad auf den zulässigen Antriebsschlupf einbremsen, was wiederum den Lenkeffekt vermindern und den Kurvenradius vergrößern würde.

Die Erfindung schlägt zur Lösung dieser Problematik ein Verfahren zum Betreiben eines Steuerungssystems eines Fahrzeugs vor, welches wenigstens Folgendes aufweist:

   a) Einen von einer Antriebssteuerung gesteuerten Antriebsmotor, welcher wenigstens eine angetriebene Achse mit einem ersten Antriebsrad und einem zweiten Antriebsrad antreibt,
   b) ein Differentialgetriebe zwischen dem ersten Antriebsrad und dem zweiten Antriebsrad,
   c) eine von einer Bremssteuerung gesteuerte Bremseinrichtung mit einem ersten Bremsaktuator für das erste Antriebsrad und einem zweiten Bremsaktuator für das zweite Antriebsrad,
   d) eine Lenkbremsfunktion, mit welcher durch gezieltes Ansteuern des ersten Bremsaktuators und/oder des zweiten Bremsaktuators der wenigstens einen angetriebenen Achse eine Lenkwirkung auf das Fahrzeug erzielbar ist,
   e) eine Antriebsschlupfregelung, mit welcher ein unzulässiger Antriebsschlupf an dem ersten Antriebsrad und/oder an dem zweiten Antriebsrad der wenigstens einen angetriebenen Achse durch

      e1) einen Eingriff in die Antriebssteuerung des Antriebsmotors, bei dem die Antriebsleistung des Antriebsmotors reduziert wird, und/oder durch
      e2) einen Eingriff in die Bremssteuerung der Bremseinrichtung, bei dem ein unzulässig antriebsschlupfendes Antriebsrad von dem ersten Antriebsrad und/oder von dem zweiten Antriebsrad gezielt eingebremst wird,

   auf einen zulässigen Antriebsschlupf rückführbar ist, wobei
   f) falls die Lenkbremsfunktion an der wenigstens einen angetriebenen Achse aktiv ist oder aktiviert worden ist, und falls dann die Antriebsschlupfregelung an der wenigstens einen angetriebenen Achse aktiviert wird, im Rahmen der Antriebsschlupfregelung auf den Eingriff in die Bremssteuerung der Bremseinrichtung verzichtet wird.

Unter einem "Eingriff in die Bremssteuerung" soll verstanden werden, dass die Bremseinrichtung bzw. Komponenten der Bremseinrichtung aktiviert werden, um an wenigstens einem Antriebsrad eine Bremswirkung hervorzurufen. In analoger Weise soll unter einem "Eingriff in die Antriebsteuerung" verstanden werden, dass die Antriebseinrichtung bzw. Komponenten der Antriebseinrichtung aktiviert werden, um an wenigstens einem Antriebsrad eine reduzierte Antriebswirkung hervorzurufen

Daher ist die Antriebsschlupfregelung (ASR) des Steuerungssystems zwar grundsätzlich ausgebildet, dass sie einen Eingriff in die Antriebssteuerung des Antriebsmotors und einen Eingriff in die Bremssteuerung der Bremseinrichtung durchführen kann, um den Antriebsschlupf an dem ersten und/oder zweiten Antriebsrad der angetriebenen Achse auf einen zulässigen Antriebsschlupf zurückzuführen. Jedoch wird auf den Eingriff in die Bremssteuerung der Bremseinrichtung verzichtet, d.h. die Bremseinrichtung wird nicht aktiviert, falls die Lenkbremsfunktion an der wenigstens einen angetriebenen Achse aktiv ist oder aktiviert worden ist.

Dann wird der durch die Lenkbremsfunktion initiierte oder herbeigeführte Lenkeffekt nicht durch ein mittels der Antriebsschlupfregelung herbeigeführtes Einbremsen des kurvenäußeren Antriebsrades beeinträchtigt. Damit können mit Hilfe der Lenkbremsfunktion kleine Kurvenradien, insbesondere auf einer Fahrbahn bzw. auf einem Untergrund mit niedrigem Reibwert gefahren werden. Weiterhin können damit auch verschleißfördernde Bremseingriffe der ASR-Regelung vermieden werden, die auch dadurch zustande kommen können, dass der Antriebsstrang verspannt.

Falls die Lenkbremsfunktion an der wenigstens einen angetriebenen Achse aktiv ist oder aktiviert worden ist, und falls dann und die Antriebsschlupfregelung an der wenigstens einen angetriebenen Achse aktiviert wird, so soll im Rahmen der Antriebsschlupfregelung aber vorzugsweise der Eingriff in die Antriebssteuerung des Antriebsmotors durchgeführt werden, bei dem die Antriebsleistung des Antriebsmotors reduziert wird. Dadurch wird die Fahrstabilität des Fahrzeugs vorteilhaft verbessert.

Wie oben ausgeführt, ist das Differentialgetriebe als Achsdifferential ausgebildet, welches für den Ausgleich der Drehzahlen zwischen den beiden Antriebsrädern der angetriebenen Achse sorgt.

Das Differentialgetriebe kann mit einer Differentialsperre oder ohne Differentialsperre oder auch mit einer schaltbaren Differentialsperre ausgeführt sein. Eine (eingeschaltete) Differentialsperre schafft eine starre Antriebsverbindung zwischen dem ersten Antriebsrad und dem zweiten Antriebsrad, so dass die Drehzahlen der beiden Antriebsräder gleich sind, während bei ausgeschalteter Differentialsperre oder bei einem Differentialgetriebe ohne Differentialsperre keine starre Antriebsverbindung vorhanden ist.

Das Steuerungssystem, welches nach dem erfindungsgemäßen Verfahren betrieben wird, soll bevorzugt ein Differentialgetriebe ohne Differentialsperre oder ein Differentialgetriebe mit Differentialsperre aufweisen, bei welchem im erfindungsgemäßen Betrieb die Differentialsperre ausgeschaltet ist, damit die in Zusammenhang mit der Erfindung oben erläuterte Problematik überhaupt eintritt.

In den Unteransprüchen sind vorteilhafte Weiterbildungen der Erfindung angegeben.

Aus Sicherheitsgründen kann im Rahmen der Antriebsschlupfregelung auf den Eingriff in die Bremssteuerung der Bremseinrichtung nur dann verzichtet werden, wenn die Fahrgeschwindigkeit des Fahrzeugs kleiner als eine vorgegebene Grenzgeschwindigkeit ist (v < $v_{grenz}$).

Auch kann das Steuerungssystem weiterhin

a) eine insbesondere durch einen Fahrer des Fahrzeugs betätigbare Lenkeinrichtung, und/oder
b) eine autonomen Fahrzeugsteuerung, und/oder
c) wenigstens ein Fahrerassistenzsystem umfassen,

durch welche und/oder durch welches ein Lenkanforderungssignal erzeugbar ist, mit welchem eine Kurvenfahrt des Fahrzeugs herbeigeführt werden soll.

Das Lenkanforderungssignal kann beispielsweise von der autonomen Fahrzeugsteuerung und/oder von dem Fahrerassistenzsystem erzeugt werden, falls festgestellt worden ist, dass die durch den Fahrer des Fahrzeugs betätigte Lenkeinrichtung einen Fehler oder Defekt aufweist. Dann wird (werden) die autonome Fahrzeugsteuerung und/oder das Fahrerassistenzsystem als Redundanz für die ausgefallene Lenkeinrichtung herangezogen.

Die Lenkbremsfunktion kann an der wenigstens einen angetriebenen Achse insbesondere auf das Lenkanforderungssignal hin aktiviert, d.h. in Gang gesetzt werden. Insbesondere wird das Lenkanforderungssignal der autonomen Fahrzeugsteuerung und/oder des Fahrerassistenzsystems zum Lenken des Fahrzeugs herangezogen, falls festgestellt worden ist, dass die Lenkeinrichtung einen Fehler oder Defekt aufweist. Das Lenkanforderungssignal wird dann mittels Lenkbremsen, d.h. mit Hilfe der Lenkbremsfunktion wenigstens an der wenigstens einen angetriebenen Achse (HA) umgesetzt. Zusätzlich kann das Lenkbremsen natürlich auch an einer nicht angetriebenen Achse, beispielsweise an einer gelenkten Vorderachse ausgeführt werden.

Beim Lenkbremsen wird dann von dem ersten Antriebsrad und dem zweiten Antriebsrad der Antriebsachse bevorzugt dasjenige Antriebsrad abgebremst, welches in Bezug auf die durch das Lenkanforderungssignal repräsentierte Kurvenfahrt das kurveninnere Antriebsrad darstellt. Dabei kann das von dem kurveninneren Antriebsrad abweichende Antriebsrad nicht abgebremst werden.

In analoger Weise kann beim Lenkbremsen wird von einem ersten nicht angetriebenen Rad und einem zweiten nicht angetriebenen Rad einer nicht angetriebenen Achse (z.B. einer nicht angetriebenen Vorderachse) bevorzugt dasjenige Rad abgebremst, welches in Bezug auf die durch das Lenkanforderungssignal repräsentierte Kurvenfahrt das kurveninnere Rad darstellt. Dabei kann das von dem kurveninneren Rad abweichende Rad nicht abgebremst werden.

Als Bremseinrichtung kann insbesondere ein elektro-pneumatisches und elektronisch geregeltes Bremssystem (EBS) mit einem 2-Kanal-Druckregelmodul oder mit zwei 1-Kanal-Druckregelmoduln herangezogen werden, einem ersten 1-Kanal-Druckregelmodul und einem zweiten Druckregelmodul, an der wenigstens einen angetriebenen Achse herangezogen wird, wobei durch einen ersten Kanal des 2-Kanal-Druckregelmoduls oder des ersten 1-Kanal-Druckregelmoduls ein erster Bremsdruck für den ersten Bremsaktuator und durch einen zweiten Kanal des 2-Kanal-Druckregelmoduls oder des zweiten 1-Kanal-Druckregelmoduls ein zweiter Bremsdruck für den zweiten Bremsaktuator individuell regelbar ist. Weil dann der erste Bremsaktuator und der zweite Bremsaktuator durch jeweils einen Kanal eines Druckregelmoduls gesteuert sind, ist damit ein radindividuelles Abbremsen des ersten Antriebsrads und des zweiten Antriebsrads der Antriebsachse im Rahmen der Lenkbremsfunktion möglich. Unter den oben genannten Voraussetzungen kann dann auch ein radindividuelles Abbremsen des ersten Antriebsrads und des zweiten Antriebsrads der Antriebsachse im Rahmen der Antriebsschlupfregelung stattfinden.

Auch kann die Antriebsschlupfregelung automatisch aktiviert werden, wenn ein unzulässiger Antriebsschlupf an dem ersten Antriebsrad und/oder an dem zweiten Antriebsrad der wenigstens einen angetriebenen Achse festgestellt worden ist.

Die Erfindung betrifft auch ein Fahrzeug, insbesondere ein Zugfahrzeug einer Zugfahrzeug-Anhänger-Kombination mit einem Steuerungssystem, welches durch ein Verfahren nach einem der vorhergehenden Ansprüche gesteuert ist.

Zeichnung

Nachstehend ist ein Ausführungsbeispiel der Erfindung in der Zeichnung dargestellt und in der nachfolgenden Beschreibung näher erläutert. In der Zeichnung zeigt

Fig.1 einen schematischen Schaltplan einer elektro-pneumatischen Bremseinrichtung als Teil einer bevorzugten Ausführungsform eines Steuerungssystems eines Zugfahrzeugs einer Zugfahrzeug-Anhängerkombination;

Fig. 2 einen schematischen Schaltplan des Steuerungssystems des Zugfahrzeugs der Zugfahrzeug-Anhängerkombination;

Fig. 3 einen schematischen Schaltplan einer elektro-mechanischen Lenkeinrichtung als Teil der bevorzugten Ausführungsform des Steuerungssystems einer Zugfahrzeugs einer Zugfahrzeug-Anhängerkombination;

Fig. 4 ein Ablaufschema einer bevorzugten Ausführungsform eines Verfahrens zum Betreiben des Steuerungssystems.

Beschreibung des Ausführungsbeispiels

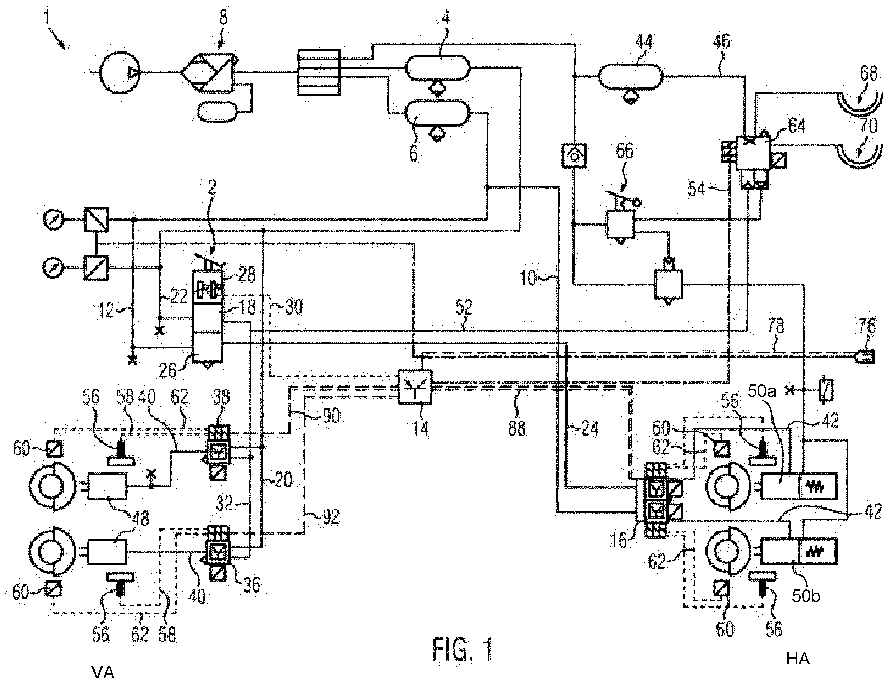

In **Fig. 1** ist schematisch eine Betriebsbremseinrichtung 1 als Teil einer bevorzugten Ausführungsform eines Steuerungssystems 300 eines Zugfahrzeugs einer Zugfahrzeug-Anhängerkombination gezeigt. Im vorliegenden Fall weist die Zugfahrzeug-Anhängerkombination einen 2-achsigen Sattelanhänger auf, es können jedoch auch ein Deichselanhänger oder mehrere Deichselanhänger am Zugfahrzeug angehängt sein. Dabei wird die Betriebsbremseinrichtung 1 des Zugfahrzeugs beispielsweise durch eine elektro-pneumatische Reibungsbremsanlage in Form eines elektronisch geregelten Bremssystems (EBS; Electronic Brake System) gebildet.

Bei einem solchen elektronisch geregelten Bremssystems (EBS) sind achsweise oder radweise Druckregelmodule 16, 36, 38 vorhanden, mit integrierten Einlassventilen, Auslassventilen und Backup-Ventilen sowie mit Drucksensoren zur Erfassung des Ist-Bremsdrucks und mit einer übergeordneten Steuerelektronik zum Abgleich der Ist-Bremsdrücke mit den Soll-Bremsdrücken gemäß der jeweiligen Bremsanforderung. Das elektronisch geregelte Bremssystem (EBS) des Zugfahrzeugs beinhaltet weiterhin eine Bremsschlupfregelung (ABS), deren ABS-Steuerroutinen bevorzugt in ein zentrales Bremssteuergerät 14 integriert sind. Weiterhin sind hier beim Zugfahrzeug vorzugsweise eine Antriebsschlupfregelung (ASR) sowie ein elektronisches Stabilitätsprogramm (ESP) vorhanden, wobei die diesbezüglichen Steuerroutinen ebenfalls in dem zentralen Bremssteuergerät 14 implementiert sind.

Gemäß des in **Fig. 1** gezeigten Schaltschemas der elektro-pneumatischen Betriebsbremseinrichtung 1 des Zugfahrzeugs sind ein Fußbremswertgeber 2, ein Vorderachs-Vorratsdruckbehälter 4 zur Versorgung eines Vorderachs-Druckkreises oder Vorderachs-Druckkanals sowie ein Hinterachs-Vorratsdruckbehälter 6 zur Versorgung eines Hinterachs-Druckkreises oder Hinterachs-Druckkanals vorhanden. Die Luftbeschaffung, Luftaufbereitung und die Absicherung ist wie gesetzlich vorgeschrieben ausgeführt durch ein hier nicht näherbeschriebenes Luftaufbereitungsmodul 8.

Der Hinterachs-Vorratsdruckbehälter 6 ist über pneumatische Versorgungsleitungen 10, 12 einerseits mit einem Vorratsanschluss eines 2-Kanal-Druckregelmoduls 16 für die Bremszylinder 50 der Hinterachse sowie mit einem Hinterachs-Fußbremsventil 26 des Fußbremswertgebers 2 verbunden. In analoger Weise ist der Vorderachs-Vorratsdruckbehälter 4 über pneumatische Versorgungsleitungen 20, 22 mit Vorratsanschlüssen von zwei jeweils einem Bremszylinder 48 eines Vorderrads zugeordneten 1-Kanal-Druckregelmodulen 36, 38 sowie mit einem Vorderachs-Fußbremsventil 18 des Fußbremsgebers 2 verbunden. Der Fußbremswertgeber 2 umfasst daher zwei pneumatisch wirkende Fußbremsventile 18, 26, welche abhängig von einer durch den Fuß des Fahrers auf ein Bremspedal vorgegebenen Bremsanforderung jeweils einen pneumatischen Back-up-Druck oder Steuerdruck an den Ausgängen der Fußbremsventile 18, 26 erzeugen. Parallel hierzu sind in dem Fußbremswertgeber 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Bremsen-Datenbus 30 ausgebildete elektrische Verbindung zwischen dem elektrischen Kanal 28 des Fußbremswertgebers 2 und dem zentralen elektronischen Bremssteuergerät 14 einsteuert, welches die beiden beispielsweise aus Lastgründen verschiedenen Bremsanforderungssignale für die Vorderachse und die Hinterachse unterscheiden kann. Weiterhin sind das Vorderachs-Fußbremsventil 18 und das Hinterachs-Fußbremsventil 26 des Fußbremswertgebers 2 jeweils über eine pneumatische Steuerleitung 24, 32 mit zugeordneten Back-up-Anschlüssen des 2-Kanal-Druckregelmoduls 16 bzw. der 1-Kanal-Druckregelmodule 36, 38 verbunden. Weiterhin führt jeweils eine pneumatische Bremsleitung 40, 42 von Arbeitsdruckanschlüssen des 2-Kanal-Druckregelmoduls 16 bzw. der beiden 1-Kanal-Druckregelmodule 36, 38 zu den radweisen Bremszylindern 48, 50 der Vorderachse bzw. der Hinterachse.

Drehzahlsensoren 56 melden die aktuelle Drehzahl der Räder des Zweiachsfahrzeugs über elektrische Signalleitungen 58 an das zentrale Bremssteuergerät 14. Ebenso sind bevorzugt Verschleißsensoren 60 je Radbremse vorgesehen, welche abhängig vom aktuellen Bremsenverschleiß Signale über elektrische Signalleitungen 62 in das zentrale Bremssteuergerät 14 melden.

Weiterhin ist ein Anhängersteuermodul 64 vorgesehen, welches einerseits mit einem zugfahrzeugseitigen Anhänger-Vorratsdruckbehälter 44 über eine Versorgungsleitung 46 mit Druckluft versorgt wird und andererseits vom pneumatischen Steuerdruck beispielsweise des Vorderachs-Fußbremsventils 18 des Fußbremswertgebers 2 über eine Steuerleitung 52 pneumatisch durch Back-up-Druck gesteuert wird. Weiterhin erhält das Anhängersteuermodul 64 auch ein elektrisches Signal vom zentralen Bremssteuergerät 14 über eine elektrische Steuerleitung 54. Schließlich wird das Anhängersteuermodul 64 noch von einer hier nicht interessierenden Feststellbremseinheit 66 angesteuert.

Das Anhängersteuermodul 64 enthält typischerweise ein Einlassmagnetventil und ein Auslassmagnetventil sowie ein Backup-Magnetventil zur Drucksteuerung eines ebenfalls integrierten und vom Anhänger-Druckluftvorrat 44 druckluftgespeisten Relaisventils, um abhängig von einem über die elektrische Steuerleitung 54 herangeführten Steuersignal über diese Magnetventile und das Relaisventil einen Steuerdruck für einen Kupplungskopf "Bremse" 70 auszusteuern. Das Relaisventil moduliert dabei aus dem an seinem Vorratsanschluss anstehenden Vorratsdruck des Anhänger-Vorratsdruckbehälters 44 abhängig von dem durch die Magnetventile gebildeten Steuerdruck den Steuerdruck für den Kupplungskopf "Bremse" 70. Mittels eines integrierten Drucksensors wird dieser Steuerdruck für den Kupplungskopf "Bremse" 70 gemessen und an das zentrale Bremssteuergerät 14 gemeldet. Fällt diese vorrangige elektrische Steuerung aus, so schaltet das integrierte Back-up-Ventil durch und das Relaisventil wird durch den in der Steuerleitung 52 geführten pneumatischen Steuerdruck des Vorderachs-Bremskreises gesteuert. Schließlich schleift das Anhängersteuermodul 64 die vom Anhänger-Druckluftvorrat 44 stammende Druckluft unter Vorratsdruck an einen Kupplungskopf "Vorrat" 68 des Zugfahrzeugs durch. Der Aufbau und die Funktionen eines solchen elektro-pneumatischen Anhängersteuermoduls 64 sind hinlänglich bekannt und brauchen deshalb hier nicht weiter erläutert zu werden.

Die Bremszuspanneinrichtungen der Hinterachse sind bevorzugt als bekannte Kombizylinder, d. h. als Kombination eines aktiven Betriebsbremszylinders 50 und eines passiven Federspeicherbremszylinders ausgebildet. "Aktiv" bedeutet in diesem Zusammenhang, dass die Betriebsbremszylinder 50 bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen.

Das als Baueinheit ausgeführte elektro-pneumatische 2-Kanal-Druckregelmodul 16 hat zwei getrennt regelbare Druckregelkanäle, wobei für jeden Druckregelkanal auf der Basis einer von dem Hinterachs-Druckluftvorrat 6 stammenden Vorratsluft abhängig von dem Bremsanforderungssignal des Fußbremswertgebers 2 ein geregelter, an den jeweiligen Arbeitsdruckanschlüssen anstehender Arbeitsdruck für die Bremszylinder 50 der Hinterachse erzeugt und mittels der integrierten Drucksensoren gemessen wird, um den gemessenen Ist-Bremsdruck an den Soll-Bremsdruck gemäß Bremsanforderung anzupassen bzw. einzuregeln. In analoger Weise wird in jedem 1-Kanal-Druckregelmodul 36, 38 der Vorderachse individuell für die beiden Bremszylinder 48 der Räder der Vorderachse der Bremsdruck geregelt.

Zur Ausbildung von pneumatisch kreisgetrennten Druckregelkanälen (beispielsweise hier: Vorderachs-Druckregelkanal bzw. Hinterachs-Druckregelkanal) ist jedem Druckregelkanal folglich ein eigener Druckluftvorrat 4 , 6 zugeordnet, wobei die pneumatischen Strömungswege eines jeden Druckregelkanals ausgehend von dem zugeordneten Druckluftvorrat 4 , 6 über die zugeordneten Druckregelmodule 16 , 36 , 38 bis zu den zugeordneten Bremszuspanneinrichtungen 48, 50a, 50b von dem pneumatischen Strömungsweg eines jeweils anderen Druckregelkanals pneumatisch getrennt ausgebildet sind. Die Bremszuspanneinrichtungen 48 der Vorderachse sind hier als aktive pneumatische Betriebsbremszylinder 48 und die Bremszuspanneinrichtungen 50a, 50b der Hinterachse als kombinierte Betriebs- und Federspeicherbremszylinder ausgebildet, mit einem aktiven Betriebsbremsteil und einem passiven Federspeicherbremsteil.

Dabei wird ein erstes Antriebsrad der hier vorzugsweise angetriebenen Hinterachse durch eine erste Bremszuspanneinrichtung 50a und ein zweites Antriebsrad der Hinterachse durch eine zweite Bremszuspanneinrichtung 50b abgebremst.

Zur Ausbildung einer elektro-pneumatischen Bremsanlage mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelmodul 16, 36, 38 besonders bevorzugt ein eigener Back-up-Kreis zugeordnet, mit eigenem Back-up-Ventil für die Einsteuerung eines von dem Vorratsdruck des dem jeweiligen Druckregelkreis der Hinterachse bzw. der Vorderachse zugeordneten Druckluftvorrat 4, 6 abgeleiteten und vom Fußbremswertgeber 2 gebildeten pneumatischen Back-up- oder Steuerdrucks, aus welchem bei einem Ausfall von elektrischen Komponenten der jeweilige Bremsdruck an den Arbeitsdruckanschlüssen der Druckregelmodule 16, 36, 38 gebildet wird.

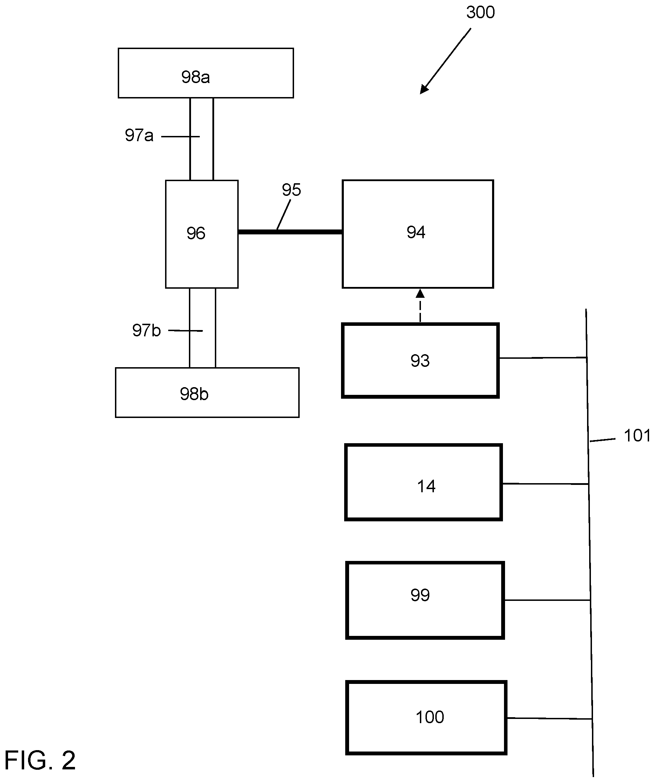

Die Betriebsbremseinrichtung 1 des Zugfahrzeugs und die Bremseinrichtung des Anhängers sind, wie bei solchen Bremsanlagen üblich, mittels jeweils eines Kupplungskopfes "Vorrat" 68 und jeweils mittels eines Kupplungskopfes "Bremse" 70 miteinander gekoppelt. Dabei wird der vom Zugfahrzeug herangeführte Vorratsdruck in einer in Fig. 2 gezeigten anhängerseitigen Vorratsdruckleitung 72 und der vom Zugfahrzeugherangeführte Steuer- oder Bremsdruck in einer anhängerseitigen Steuerdruckleitung 74 im Anhänger geführt. Da das Anhängersteuermodul 64 kein eigenes elektronisches Steuergerät besitzt, müssen die elektrischen Bremssteuersignale vom zentralen Bremssteuergerät 14 über einen CAN-BUS "Anhänger" 78 und eine elektronische Anhängerschnittstelle 76 an den Anhänger übertragen werden, falls dieser eine elektro-pneumatische Bremsanlage aufweist, was hier aber nicht der Fall ist. Mangels elektropneumatischer Bremsanlage beim Anhänger findet daher keine Übertragung elektrischer Bremssteuersignale vom Zugfahrzeug auf den Anhänger statt. Das Anhängersteuermodul 64 wie auch das 2-Kanal-Druckregelmodul 16 und die beiden 1-Kanal-Druckregelmodule 36, 38 werden jeweils über eine elektrische Steuerleitung 54, 88, 90, 92 von dem zentralen Bremssteuergerät 14 angesteuert.

Vor diesem Hintergrund ist die Funktionsweise der Bremsvorrichtung wie folgt: Bei einem normalen Bremsvorgang betätigt der Fahrer das Bremspedal und damit den Fußbremswertgeber 2, wodurch in dem elektrischen Kanal 28 ein elektrisches Bremsanforderungssignal analog zur gewünschten Soll-Verzögerung erzeugt und in das zentrale Bremssteuergerät 14 eingesteuert wird, welches daraufhin über die die elektrischen Steuerleitungen 54 , 88 , 90 , 92 das Anhängersteuermodul 64 , das 2-Kanal-Druckregelmodul 16 sowie die beiden 1-Kanal-Druckregelmoduleentsprechend dem Bremsanforderungssignal und eventuell abhängig von weiteren Parametern wie der jeweiligen Beladung steuert. Dabei werden die jeweils integrierten Einlassmagnetventile, Auslassmagnetventile und evtl. Back-up-Magnetventile, die meist als 2/2-Wege-Magnetventile ausgebildet sind entsprechend der Bremsanforderung geschaltet, damit sie die ebenfalls integrierten Relaisventile pneumatisch steuern, um einen gemäß der Bremsanforderung entsprechenden Soll-Bremsdruck bzw. Soll-Steuerdruck in die betreffenden Bremszuspanneinrichtungen 48, 50a, 50b des Zugfahrzeugs und anhängerseitig in das Anhängersteuerventil 80 einzusteuern, welches aus dem Soll-Steuerdruck den Bremsdruck für die Bremszylinder 84 des Anhängers moduliert. Die in den Druckregelmoduln 16, 36 und 38 und in dem Anhängersteuermodul 64 integrierten Drucksensoren melden dann den Ist-Bremsdruck bzw. Ist-Steuerdruck an das zentrale Bremssteuergerät 14, welches daraufhin durch Ansteuerung der modulseitigen Magnetventile den Soll-Bremsdruck bzw. Soll-Steuerdruck einregelt. In dem zentralen Bremssteuergerät 14 sind Routinen einer Antriebsschlupfregelung (ASR), einer Bremsschlupfregelung (ABS) und optional auch einer Fahrdynamikregelung (ESP) und einer adaptiven Geschwindigkeitsregelung (ACC) implementiert.

Wenn das Bremsanforderungssignal für das zentrale Bremssteuergerät 14 anstatt vom Fußbremswertgeber 2 von einem Fahrassistenzsystem wie z. B. der Antriebsschlupfregelung (ASR), einer Fahrdynamikregelung (ESP) oder einer adaptiven Geschwindigkeitsregelung (ACC) erzeugt wird, so laufen die gleichen Funktionen wie oben beschrieben ab.

Falls der Bremsschlupf eines Rades oder mehrerer Räder des Zugfahrzeugs eine vorgegebene Bremsschlupfgrenze von beispielsweise 12% bis 14% überschreitet, was über die Raddrehzahlsensoren 56 festgestellt werden kann, so spricht die Bremsschlupfregelung bzw. das ABS des Zugfahrzeugs an. Dabei wird über eine entsprechende Ansteuerung der Magnetventile in dem dem jeweils bremsschlupfenden Rad zugeordneten Druckregelmodul 36, 38 bzw. in dem den jeweils bremsschlupfenden Rädern zugeordneten Druckregelmodul 16 durch die in dem zentralen Bremssteuergerät 14 implementierten ABS-Routinen die Bremsdrücke für das Zugfahrzeug so eingestellt, dass die Bremsschlupf-Regeldifferenzausgeregelt wird.

**Fig. 2** zeigt einen schematischen Schaltplan des Steuerungssystems 300 des Zugfahrzeugs der Zugfahrzeug-Anhängerkombination. Das Steuerungssystem 300 umfasst als Bestandteil des elektronisch geregelten Bremssystems (EBS) 1 das zentrale Bremssteuergerät 14 und ein elektronisches Antriebssteuergerät 93 einer Antriebseinrichtung des Zugfahrzeugs. Die Antriebseinrichtung umfasst hier beispielsweise eine Motor-/Getriebeeinheit 94, welche über eine zentrale Antriebswelle 95 ein Differentialgetriebe 96 antreibt. Von dem Differentialgetriebe 96 zweigen erste und zweite Antriebswellen 97a, 97b ab, welche dann die ersten und zweiten Antriebsräder 98a, 98b der Hinterachse HA antreiben.

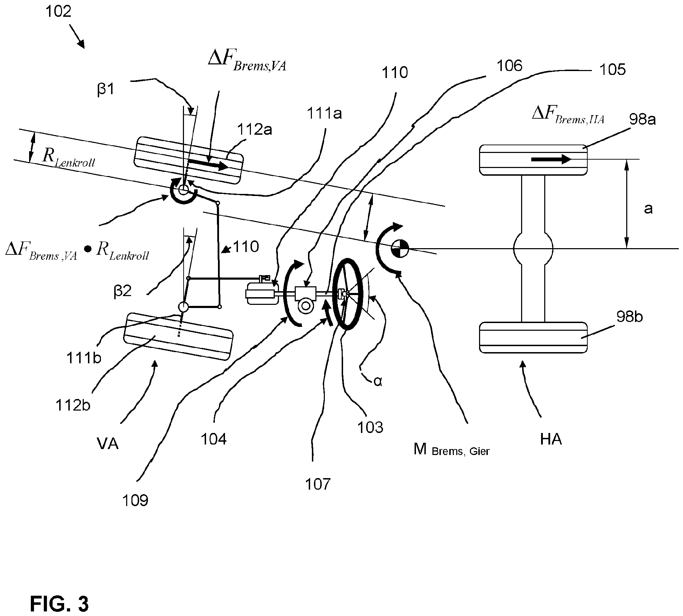

Weiterhin umfasst das Steuerungssystem 300 eine hier beispielsweise elektro-mechanische Lenkeinrichtung 102, welche im Einzelnen in **Fig. 3** dargestellt ist. Die elektro-mechanische Lenkeinrichtung 102 umfasst ein elektronisches Lenksteuergerät 99, dessen Funktion später noch beschrieben wird.

Das Lenksteuergerät 99, das zentrale Bremssteuergerät 14, das Antriebssteuergerät 93 sowie ein elektronisches Steuergerät 100 einer autonomen Fahrzeugsteuerung und/oder eines Fahrerassistenzsystems sind beispielsweise an einen Fahrzeugdatenbus 101 angeschlossen, der beispielsweise ein CAN ist. Dadurch können das Lenksteuergerät 99, das zentrale Bremssteuergerät 14, das Antriebssteuergerät 93 sowie das elektronische Steuergerät 100 Daten und Steuersignale untereinander austauschen. Insbesondere kann das zentrale Bremssteuergerät 14 das Antriebssteuergerät 93 ansteuern, um beispielsweise im Rahmen der Antriebsschlupfregelung (ASR) die Antriebsleistung des Motors 94 zu reduzieren. Auch kann dadurch das elektronische Steuergerät 100 das zentrale Bremssteuergerät 14 und/oder das Antriebssteuergerät 93 and/oder das Lenksteuergerät 99 ansteuern, damit eine Bremsung, ein Lenken und/oder eine Lenkbremsung des Zugfahrzeugs ausgeführt wird.

Zum Lenkbremsen ist eine Lenkbremsfunktion als Routine beispielsweise in dem zentralen Bremssteuergerät 14 implementiert, wobei dabei die gelenkten Räder 112a, 112b der Vorderachse VA und/oder die Antriebsräder 98a, 98b der Hinterachse HA gezielt abgebremst werden können, um einen gewünschten Lenkeffekt auf das Zugfahrzeug zu erzielen. Dieser Vorgang wird weiter unten noch beschrieben.

Die hier beispielsweise elektro-mechanische Lenkeinrichtung 102 ist im Einzelnen in Fig. 3 dargestellt. Das vom Fahrer über das Lenkrad 103 aufgebrachte Lenkradmoment 104 wird über eine Lenkspindel 105 in einen elektrischen Lenkaktuator 106 eingeleitet, welcher beispielsweise durch einen Elektromotor gebildet wird. An der Lenkspindel 105 ist außerdem ein Lenkradmomentsensor 107 angebracht, welcher das jeweils vom Fahrer über das Lenkrad 103 aufgebrachte Lenkradmoment 104 erfasst und als Lenkradmomentsignal in das elektronische Lenksteuergerät 99 einsteuert, welches an den Fahrzeug-Datenbus 101 angeschlossen ist (**Fig. 2**).

Das Lenksteuergerät 99 kann grundsätzlich den Lenkaktuator 106 abhängig vom am Lenkrad 103 erfassten Lenkradmoment 104 ansteuern, um ein gegenüber dem vom Fahrer aufgebrachten Lenkradmoment 104 ein zusätzliches Überlagerungsmoment an der Lenkspindel 105 zu erzeugen. Deshalb stellt die Lenkeinrichtung 102 hier beispielsweise eine sog. Überlagerungslenkung mit Lenkmomentüberlagerung dar. Anstatt des Lenkradmoments 104 oder zusätzlich dazu kann auch der jeweilige Lenkradwinkel $\alpha$ durch einen Lenkradwinkelsensor erfasst werden, so dass dann eine Überlagerungslenkung mit Lenkradwinkelüberlagerung vorläge.

Jedoch kann der Lenkaktuator 106 auch ohne Zutun des Fahrers, d.h. ohne Betätigung des Lenkrads 103 ein Lenkmoment 109 an der Lenkspindel 105 erzeugen. Auch kann der Lenkaktuator 106 kein Lenkmoment 109 in die Lenkspindel 105 einsteuern, so dass die Lenkkräfte allein von dem vom Fahrer erzeugten Lenkradmoment 104 abgeleitet werden. Dann geht die Lenkanforderung ausschließlich vom Fahrer aus, welcher das Lenkrad 103 entsprechend betätigt.

Die Lenkspindel 105 mündet in eine Lenkgetriebe 110, das hier bevorzugt eine hydraulische Servounterstützung und verstärkt das Lenkradmoment 104 bzw. das Lenkmoment 109. Das Lenkgetriebe 110 steuert dann über ein Lenkgestänge 110 Achsschenkel 111a, 111b des ersten und zweiten Vorderrads 112a, 112b der gelenkten Vorderachse VA an, um dort jeweils einen Lenkwinkel $\beta_1$ und $\beta_2$ für rechts und links einzustellen. Die Hinterachse HA ist hier vorzugsweise ungelenkt.

Beispielsweise kann das an der Lenkspindel 105 wirkende Lenkmoment 109 ausschließlich vom Lenkaktuator 106 aufgrund dessen Ansteuerung durch das elektronische Lenksteuergerät 99 erzeugt werden, welches beispielsweise von der elektronischen Steuerung 100 im Rahmen einer autonomen Fahrzeugsteuerung und/oder einer Fahrerassistenzsteuerung eine Lenkanforderung empfängt, welche mittels des Fahrzug-Datenbusses 101 als Lenkanforderungssignal übermittelt wird.

Auch ist eine Situation denkbar, bei welcher ein vom Fahrer über das Lenkrad 103 auf die Lenkspindel 105 aufgebrachtes Lenkradmoment 104 einem vom Lenkaktuator 106 aufgebrachten Lenkmoment 109 überlagert wird.

Mit Hilfe einer sog. Lenkbremsung kann im Rahmen einer Lenkbremsfunktion durch gezieltes Einbremsen hier beispielsweise des ersten (dann kurveninneren) Antriebsrads 98a an der Hinterachse HA und eines ersten (dann kurveninneren) gelenkten Rads 112a an der Vorderachse VA ein Giermoment $M_{Brems,Gier}$ erzeugt werden, welches das Zugfahrzeug veranlasst, hier beispielsweise einer Linkskurvenbahn zu folgen. Maßgebend für das Giermoment $M_{Brems,Gier}$ ist der Lenkrollradius $R_{Lenkroll}$ am ersten gelenkten Vorderrad 112a, welcher in Kombination mit der dort wirkenden Bremskraft $DF_{Brems,VA}$ ein Bremsmoment $\Delta F_{Brems,VA} \cdot R_{Lenkroll}$ erzeugt, weiterhin die halbe Achslänge a, welche in Kombination mit der Bremskraft $\Delta F_{Brems,HA}$ an dem ersten Antriebsrad 98a der Hinterachse HA ein Bremsmoment $\Delta F_{Brems,HA} \cdot a$ erzeugt. Insgesamt ist dann ein Giermoment $M_{Brems,Gier}$ aufgrund der Lenkbremsung wirksam:

$$M_{Brems,Gier} = \Delta F_{Brems,VA} \cdot R_{Lenkroll} + \Delta F_{Brems,HA} \cdot a$$

Die Lenkbremsfunktion ist beispielsweise hier in das zentrale Bremssteuergerät 14 implementiert, welches dann durch eine gezielte Ansteuerung der Kanäle der Druckregelmodule 36, 38 und 16 eine individuelle Bremsung hier beispielsweise des ersten Antriebsrads 98a durch ein Zuspannen der zugeordneten Bremszuspanneinrichtung 50a und des ersten gelenkten Vorderrads 112a durch ein Zuspannen der zugeordneten Bremszuspanneinrichtung 48 veranlasst. Die Lenkbremsanforderung für die Lenkbremsung wird hier beispielsweise von der elektronischen Steuerung 100 erzeugt und über den Fahrzeug-Datenbus 101 an das zentrale Bremssteuergerät 14 übermittelt.

Die Antriebsschlupfregelung (ASR) wird beispielsweise automatisch aktiviert, wenn ein unzulässiger Antriebsschlupf an dem ersten Antriebsrad und/oder an dem zweiten Antriebsrad der Hinterachse HA festgestellt worden ist. Der unzulässige Antriebsschlupf wird auf der Basis der Signale der Drehzahlsensoren 56 an dem ersten Antriebsrad 98a und/oder an dem zweiten Antriebsrad 98b durch das zentrale Bremssteuergerät 14 auf der Basis der Raddrehzahlsignale festgestellt, welche die Drehzahlsensoren 56 liefern und an das zentrale Bremssteuergerät 14 melden. Grundsätzlich kann dann das zentrale Bremssteuergerät 14 das 2-Kanal-Druckregelmodul 16 ansteuern, um den Betriebsbremsteil der ersten Bremszuspanneinrichtung 50a der Hinterachse HA und/oder den Betriebsbremsteil der zweiten Bremszuspanneinrichtung 50b der Hinterachse zu aktivieren, um das erste Antriebsrad 98a und/oder das zweite Antriebsrad 98b der Hinterachse HA abzubremsen, damit ein dort eventuell vorliegender unzulässiger Antriebsschlupf auf einen zulässigen Antriebsschlupf rückgeführt wird. Zusätzlich oder alternativ kann, wie oben bereits ausgeführt, zu diesem Zweck das zentrale Bremssteuergerät 14 auch das Antriebssteuergerät 93 ansteuern, um im Rahmen der Antriebsschlupfregelung (ASR) die Antriebsleistung des Motors 94 zu reduzieren, was wiederum in einem geringeren Antriebsschlupf der beiden Antriebsräder 98a, 98b resultiert.

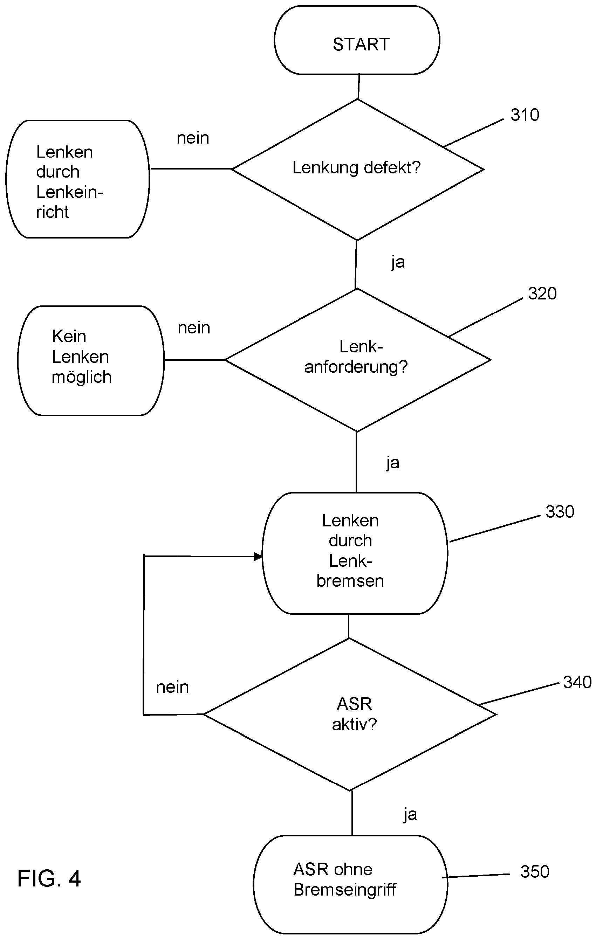

**Fig. 4** zeigt nun ein Ablaufschema einer bevorzugten Ausführungsform eines Verfahrens zum Betreiben des Steuerungssystems 300.

Nach dem Start des Verfahrens wird in einem ersten, optionalen Schritt 310 abgefragt, ob die Lenkeinrichtung 102 einen Fehler oder Defekt aufweist. Die Fehlerdetektion kann durch Selbstüberwachung oder durch Fremdüberwachung der Lenkeinrichtung 102 erfolgen.

Falls dies nicht der Fall ist ("nein"), so kann durch die Lenkeinrichtung 102 selbst, d.h. durch das vom Fahrer gesteuerte Lenkrad 103 und/oder durch das elektronische Lenksteuergerät 99 ein Lenkanforderungssignal erzeugt werden, woraufhin der dem Lenkanforderungssignal entsprechende Lenkeffekt ausgeführt wird.

Falls dies jedoch der Fall ist ("ja"), so kann durch die Lenkeinrichtung 102 selbst, d.h. weder durch das vom Fahrer gesteuerte Lenkrad 103 noch durch das elektronische Lenksteuergerät 99 ein Lenkanforderungssignal erzeugt bzw. umgesetzt werden.

In einem nachfolgenden Schritt 320 wird dann abgefragt, ob ein Lenkanforderungssignal vorliegt, welches beispielsweise von dem elektronischen Steuergerät 100 erzeugt worden ist, insbesondere von der dort implementierten autonomen Fahrzeugsteuerung und/oder von einem dort implementierten Fahrerassistenzsystem. Das elektronische Steuergerät 100 kann ausgebildet sein, dass es bei einem detektierten Fehler oder einem detektierten Defekt in der Lenkeinrichtung 102 durch die dort implementierte autonome Fahrzeugsteuerung und/oder das dort implementierte Fahrerassistenzsystem als Redundanz für die Lenkeinrichtung 102 ein Lenkanforderungssignal erzeugt.

Falls dies nicht der Fall ist ("nein"), d.h. es liegt kein Lenkanforderungssignal vor, so wird von dem elektronischen Steuergerät 100 kein Lenken des Zugfahrzeugs angefordert. Falls dies jedoch der Fall ist ("ja"), d.h., wenn das elektronische Steuergerät 100 ein Lenkanforderungssignal erzeugt hat, was durch Abfrage der auf dem Fahrzeugdatenbus 101 geführten Signale möglich ist, so wird dann das Lenkanforderungssignal durch die im zentralen Bremssteuergerät 14 implementierte Lenkbremsfunktion in einem Schritt 330 umgesetzt ("Lenken durch Lenkbremsen").

In einem nachfolgenden Schritt 340 wird dann abgefragt, ob die Antriebsschlupfregelung (ASR) an der angetriebenen Hinterachse HA aktiv oder aktiviert worden ist. Diese Abfrage findet bevorzugt innerhalb des zentralen Bremssteuergeräts 14 statt, in welchem die Antriebsschlupfregelung (ASR) implementiert ist. Eine Aktivierung der Antriebsschlupfregelung (ASR) an der Hinterachse HA findet statt, falls festgestellt worden ist, dass wenigstens eines der Antriebsräder 98a, 98b unzulässig antriebsschlupft.

Falls dies nicht der Fall ist ("nein"), so werden das Lenken durch Lenkbremsen im Schritt 330 wie oben beschrieben und damit der gewünschte Lenkeffekt (weiterhin) solange ausgeführt, bis der gewünschte Lenkeffekt eingetreten ist, was durch eine Lenkwinkelregelung realisiert sein kann. Falls dies jedoch der Fall ist ("ja"), so wird die Antriebsschlupfregelung (ASR) in einem nachfolgenden Schritt 350 zwar ausgeführt, jedoch wird auf eine Aktivierung der Bremseinrichtung 1, d.h. auf ein gezieltes Einbremsen der Antriebsräder 98a, 98b der Hinterachse HA verzichtet und beispielsweise lediglich das Antriebssteuergerät 93 angesteuert, um die Antriebsleistung des Motors 94 zu reduzieren, um dadurch alleine den Antriebsschlupf an den Antriebsrädern 98a, 98b zu vermindern. Durch diese Maßnahme sollen von der ASR-Regelung initiierte und von der Bremseinrichtung 1 erzeugte Bremskräfte vermieden werden, welche sich negativ auf die Lenkbremsung auswirken können. Mit anderen Worten wird die ASR-Regelung auf die Reduzierung der Antriebsleistung beschnitten und auf einen Bremseingriff verzichtet.

Bezugszeichenliste

| | |
|---|---|
| 1 | Betriebsbremseinrichtung |
| 2 | Fußbremswertgeber |
| 4 | VA-Vorratsdruckbehälter |
| 6 | HA-Vorratsdruckbehälter |
| 8 | Luftaufbereitungsmodul |
| 10 | Versorgungsleitung |
| 12 | Versorgungsleitung |
| 14 | Bremssteuergerät |
| 16 | 2-Kanal-Druckregelmodul |
| 18 | VA-Fußbremsventil |
| 20 | Versorgungsleitung |
| 22 | Versorgungsleitung |
| 24 | Steuerleitung |
| 26 | HA-Fußbremsventil |
| 28 | elektrischer Kanal |
| 30 | Bremsen-Datenbus |
| 32 | Steuerleitung |
| 36 | 1-Kanal-Druckregelmodul |
| 38 | 1-Kanal-Druckregelmodul |
| 40 | Bremsleitung |
| 42 | Bremsleitung |
| 44 | Anhänger-Vorratsdruckbehälter |
| 46 | Versorgungsleitung |
| 48 | Bremszuspanneinrichtung VA |
| 50a | erste Bremszuspanneinrichtung HA |
| 50b | zweite Bremszuspanneinrichtung HA |
| 52 | Steuerleitung |
| 54 | elektrische Steuerleitung |
| 56 | Drehzahlsensoren |
| 58 | elektrische Signalleitungen |
| 60 | Verschleißsensoren |
| 62 | elektrische Signalleitungen |
| 64 | Anhängersteuermodul |
| 66 | Feststell-Bremseinheit |
| 68 | Kupplungskopf "Vorrat" |
| 70 | Kupplungskopf "Bremse" |
| 72 | Vorratsdruckleitung |
| 74 | Steuerdruckleitung |
| 76 | Anhängerschnittstelle |
| 78 | Anhänger-Datenbus |
| 80 | Anhängersteuerventil |
| 86 | Rückschlagventil |
| 88 | elektrische Steuerleitung |
| 90 | elektrische Steuerleitung |
| 92 | elektrische Steuerleitung |
| 93 | Antriebssteuergerät |
| 94 | Motor-/Getriebeeinheit |
| 95 | Antriebswelle |
| 96 | Differentialgetriebe |
| 97a | erste Antriebswelle |
| 97b | zweite Antriebswelle |
| 98a | erstes Antriebsrad |

| | |
|---|---|
| 98b | zweites Antriebsrad |
| 99 | Lenksteuergerät |
| 100 | elektronisches Steuergerät |
| 101 | Fahrzeugdatenbus |
| 102 | Lenkeinrichtung |
| 103 | Lenkrad |
| 104 | Lenkradmoment |
| 105 | Lenkspindel |
| 106 | Lenkaktuator |
| 107 | Lenkradmomentsensor |
| 109 | Lenkmoment |
| 110 | Lenkgetriebe |
| 111a | erster Achsschenkel |
| 111b | zweiter Achsschenkel |
| 112a | erstes Vorderrad |
| 112b | zweites Vorderrad |
| 300 | Steuerungssystem |

**Patentansprüche**

1. Verfahren zum Betreiben eines Steuerungssystems (300) eines Fahrzeugs, welches wenigstens Folgendes aufweist:

   a) Einen von einer Antriebssteuerung (93) gesteuerten Antriebsmotor (94), welcher . wenigstens eine angetriebene Achse (HA) mit einem ersten Antriebsrad (98a) und einem zweiten Antriebsrad (98b) antreibt,
   b) ein Differentialgetriebe (96) zwischen dem ersten Antriebsrad (98a) und dem zweiten Antriebsrad (98b), welches von dem Antriebsmotor (94) angetrieben ist,
   c) eine von einer Bremssteuerung (14) gesteuerte Bremseinrichtung (1) mit einem ersten Bremsaktuator (50a) für das erste Antriebsrad (98a) und einem zweiten Bremsaktuator (50b) für das zweite Antriebsrad (98b),
   d) eine Lenkbremsfunktion, mit welcher durch gezieltes Ansteuern des ersten Bremsaktuators (50a) und/oder des zweiten Bremsaktuators (50b) der wenigstens einen angetriebenen Achse (HA) eine Lenkwirkung auf das Fahrzeug erzielbar ist,
   e) eine Antriebsschlupfregelung (ASR), mit welcher ein unzulässiger Antriebsschlupf an dem ersten Antriebsrad (98a) und/oder an dem zweiten Antriebsrad (98b) der wenigstens einen angetriebenen Achse (HA) durch

   e1) einen Eingriff in die Antriebssteuerung (93) des Antriebsmotors (94), bei dem die Antriebsleistung des Antriebsmotors (94) reduziert wird, und/oder durch
   e2) einen Eingriff in die Bremssteuerung (14) der Bremseinrichtung (1), bei dem ein unzulässig antriebsschlupfendes Antriebsrad von dem ersten Antriebsrad (98a) und/oder von dem zweiten Antriebsrad (98b) gezielt eingebremst wird,

   auf einen zulässigen Antriebsschlupf rückführbar ist, **dadurch gekennzeichnet, dass**
   f) falls die Lenkbremsfunktion an der wenigstens einen angetriebenen Achse (HA) aktiv ist oder aktiviert worden ist, und falls dann die Antriebsschlupfregelung (ASR) an der wenigstens einen angetriebenen Achse (HA) aktiviert wird, im Rahmen der Antriebsschlupfregelung (ASR) auf den Eingriff in die Bremssteuerung (14) der Bremseinrichtung (1) verzichtet wird.

2. Verfahren nach Anspruch 1, **dadurch gekennzeichnet, dass** der Eingriff in die Antriebssteuerung (93) des Antriebsmotors (94) durchgeführt wird.

3. Verfahren nach Anspruch 1 oder 2, **dadurch gekennzeichnet, dass** im Rahmen der Antriebsschlupfregelung (ASR) auf den Eingriff in die Bremssteuerung (14) der Bremseinrichtung (1) nur verzichtet wird, wenn die Fahrgeschwindigkeit (v) des Fahrzeugs kleiner als eine vorgegebene Grenzgeschwindigkeit ($v_{grenz}$) ist.

4. Verfahren nach einem der vorhergehenden Ansprüche, **dadurch gekennzeichnet, dass** das Steuerungssystem (300) weiterhin

   a) eine Lenkeinrichtung (102), und/oder

b) eine autonome Fahrzeugsteuerung (100), und/oder

c) wenigstens ein Fahrerassistenzsystem (100) umfasst,

durch welche und/oder durch welches ein Lenkanforderungssignal erzeugbar ist, mit welchem eine Kurvenfahrt des Fahrzeugs herbeigeführt wird.

5. Verfahren nach Anspruch 4, **dadurch gekennzeichnet, dass** das Lenkanforderungssignal der autonomen Fahrzeugsteuerung und/oder des Fahrerassistenzsystems zum Lenken des Fahrzeugs herangezogen wird, falls festgestellt worden ist, dass die Lenkeinrichtung (102) einen Fehler oder Defekt aufweist und dann kein Lenkanforderungssignal erzeugen kann.

6. Verfahren nach Anspruch 5, **dadurch gekennzeichnet, dass** das Lenkanforderungssignal mittels Lenkbremsen wenigstens an der angetriebenen Achse (HA) umgesetzt wird.

7. Verfahren nach Anspruch 6, **dadurch gekennzeichnet, dass** beim Lenkbremsen von dem ersten Antriebsrad (98a) und dem zweiten Antriebsrad (98b) der Antriebsachse (HA) dasjenige Antriebsrad (98a) abgebremst wird, welches in Bezug auf die durch das Lenkanforderungssignal repräsentierte Kurvenfahrt des Fahrzeugs das kurveninnere Antriebsrad darstellt.

8. Verfahren nach Anspruch 7, **dadurch gekennzeichnet, dass** beim Lenkbremsen das von dem kurveninneren Antriebsrad (98a) abweichende kurvenäußere Antriebsrad (98b) nicht abgebremst wird.

9. Verfahren nach einem der vorhergehenden Ansprüche, **dadurch gekennzeichnet, dass** als Bremseinrichtung ein elektro-pneumatisches und elektronisch geregeltes Bremssystem (1) mit einem 2-Kanal-Druckregelmodul (16) und/oder mit zwei 1-Kanal-Druckregelmoduln, einem ersten 1-Kanal-Druckregelmodul und einem zweiten Druckregelmodul, an der wenigstens einen angetriebenen Achse (HA) herangezogen wird, wobei durch einen ersten Kanal des 2-Kanal-Druckregelmoduls (16) oder des ersten 1-Kanal-Druckregelmoduls ein erster Bremsdruck für den ersten Bremsaktuator (50a) und durch einen zweiten Kanal des 2-Kanal-Druckregelmoduls (16) oder des zweiten 1-Kanal-Druckregelmoduls ein zweiter Bremsdruck für den zweiten Bremsaktuator (50b) individuell regelbar ist.

10. Verfahren nach einem der vorhergehenden Ansprüche, **dadurch gekennzeichnet, dass** die Antriebsschlupfregelung (ASR) automatisch aktiviert wird, wenn ein unzulässiger Antriebsschlupf an dem ersten Antriebsrad (98a) und/oder an dem zweiten Antriebsrad (98b) der wenigstens einen angetriebenen Achse (HA) festgestellt worden ist.

11. Fahrzeug, insbesondere Zugfahrzeug einer Zugfahrzeug-Anhänger-Kombination mit einem Steuerungssystem (300), welches durch ein Verfahren nach einem der vorhergehenden Ansprüche gesteuert ist.

**Claims**

1. Method for operating a control system (300) of a vehicle, which has at least the following:

a) a drive motor (94) which is controlled by a drive control system (93) and which drives at least one driven axle (HA) having a first drive wheel (98a) and a second drive wheel (98b),

b) a differential gear mechanism (96) between the first drive wheel (98a) and the second drive wheel (98b), which is driven by the drive motor (94),

c) a brake device (1) which is controlled by a brake control system (14) and which has a first brake actuator (50a) for the first drive wheel (98a) and a second brake actuator (50b) for the second drive wheel (98b),

d) a steering brake function, with which a steering action on the vehicle can be achieved by selectively controlling the first brake actuator (50a) and/or the second brake actuator (50b) of the at least one driven axle (HA),

e) a traction control system (ASR), with which an inadmissible drive slip at the first drive wheel (98a) and/or at the second drive wheel (98b) of the at least one driven axle (HA) can be guided back to a permissible drive slip by

e1) engaging in the drive control (93) of the drive motor (94), wherein the drive power of the drive motor (94) is reduced, and/or by

e2) engaging in the brake control system (14) of the brake device (1), wherein a drive wheel which has inadmissibly great drive slip, is selectively braked by the first drive wheel (98a) and/or the second drive wheel (98b),

**characterised in that**

f) if the steering brake function is active or has been activated at the at least one driven axle (HA) and if the traction control system (ASR) is then activated at the at least one driven axle (HA), in the context of the traction control system (ASR) the engagement in the brake control system (14) of the brake device (1) is dispensed with.

2. Method according to claim 1, **characterised in that** the engagement in the drive control system (93) of the drive motor (94) is carried out.

3. Method according to claim 1 or 2, **characterised in that,** in the context of the traction control system (ASR), the engagement in the brake control (14) of the brake device (1) is dispensed with only when the travel speed (v) of the vehicle is less than a predetermined limit speed ($v_{grenz}$).

4. Method according to any one of the preceding claims, **characterised in that** the control system (300) further comprises

   a) a steering device (102), and/or
   b) an autonomous vehicle control system (100), and/or
   c) at least one driver assistance system (100),
   by which a steering request signal, by means of which travel of the vehicle round a bend is brought about, can be generated.

5. Method according to claim 4, **characterised in that** the steering request signal of the autonomous vehicle control system and/or of the driver assistance system is used to steer the vehicle if it has been established that the steering device (102) has a fault or a defect and then cannot produce a steering request signal.

6. Method according to claim 5, **characterised in that** the steering request signal is converted by means of steering/-braking at least at the driven axle (HA).

7. Method according to claim 6, **characterised in that,** during steering/braking of the first drive wheel (98a) and the second drive wheel (98b) of the drive axle (HA), the drive wheel (98a) which constitutes the drive wheel which is on the inside of the bend with respect to the travel of the vehicle round a bend represented by the steering request signal is braked.

8. Method according to claim 7, **characterised in that,** during steering/braking, the drive wheel (98b) which is on the outside of the bend and which is different from the drive wheel (98a) which is on the inside of the bend is not braked.

9. Method according to any one of the preceding claims, **characterised in that** an electric/pneumatic and electronically controlled brake system (1) with a two-channel pressure control module (16) or with two one-channel pressure control modules, a first one-channel pressure control module and a second pressure control module, is used as the brake device at the at least one driven axle (HA), wherein by a first channel of the two-channel pressure control module (16) or the first one-channel pressure control module a first brake pressure can be individually controlled for the first brake actuator (50a) and by a second channel of the two-channel pressure control module (16) or the second one-channel pressure control module a second brake pressure for the second brake actuator (50b) can be individually controlled.

10. Method according to any one of the preceding claims, **characterised in that** the traction control system (ASR) is automatically activated if an inadmissible drive slip at the first drive wheel (98a) and/or at the second drive wheel (98b) of the at least one driven axle (HA) has been established.

11. Vehicle, in particular a traction vehicle of a traction vehicle/semitrailer combination with a control system (300), which is controlled by a method as claimed in one of the preceding claims.

**Revendications**

1. Procédé pour faire fonctionner un système de commande (300) d'un véhicule, lequel présente au moins ce qui suit :

   a) un moteur d'entraînement (94) commandé par une commande d'entraînement (93), moteur qui entraîne au moins un essieu entraîné (HA) avec une première roue d'entraînement (98a) et une seconde roue d'entraînement (98b),

b) une transmission différentielle (96) entre la première roue d'entraînement (98a) et la seconde roue d'entraînement (98b), laquelle transmission est entraînée par le moteur d'entraînement (94),

c) un appareil de freinage (1) commandé par une commande de freinage (14) avec un premier actionneur de freinage (50a) pour la première roue d'entraînement (98a) et un second actionneur de freinage (50b) pour la seconde roue d'entraînement (98b),

d) une fonction de freinage de direction, avec laquelle un effet de direction sur le véhicule peut être atteint par l'intermédiaire d'une commande ciblée du premier actionneur de frein (50a) et/ou du second actionneur de frein (50b) du au moins un essieu entraîné (HA),

e) une régulation antipatinage (ASR) avec laquelle un patinage non admissible sur la première roue d'entraînement (98a) et/ou sur la seconde roue d'entraînement (98b) du au moins un essieu entraîné (HA) peut être ramené à un patinage admissible par

e1) une intervention dans la commande d'entraînement (93) du moteur d'entraînement (94), lors de laquelle la puissance d'entraînement du moteur d'entraînement (94) est réduite, et/ou

e2) une intervention dans la commande de freinage (14) de l'appareil de freinage (1), lors de laquelle une roue d'entraînement patinant de manière non admissible est freinée de manière ciblée par la première roue d'entraînement (98a) et/ou par la seconde roue d'entraînement (98b),

**caractérisé en ce que**

f) si la fonction de freinage de direction est active ou a été activée sur le au moins un essieu entraîné (HA), et si la régulation antipatinage (ASR) est alors activée sur le au moins un essieu entraîné (HA), l'intervention dans la commande de freinage (14) de l'appareil de freinage (1) est abandonnée dans le cadre de la régulation antipatinage (ASR).

2.  Procédé selon la revendication 1, **caractérisé en ce que** l'intervention dans la commande d'entraînement (93) du moteur d'entraînement (94) est effectuée.

3.  Procédé selon la revendication 1 ou 2, **caractérisé en ce que,** dans le cadre de la régulation antipatinage (ASR), l'intervention dans la commande de freinage (14) de l'appareil de freinage (1) est abandonnée uniquement lorsque la vitesse de conduite (v) du véhicule est inférieure à une vitesse limite ($v_{grenz}$) prédéterminée.

4.  Procédé selon l'une quelconque des revendications précédentes, **caractérisé en ce que** le système de commande (300) comprend en outre

a) un appareil de direction (102), et/ou

b) une commande de véhicule autonome (100), et/ou

c) au moins un système d'assistance au conducteur (100),

par l'intermédiaire desquels et/ou par l'intermédiaire de laquelle un signal de demande de direction peut être généré, avec lequel un virage du véhicule est provoqué.

5.  Procédé selon la revendication 4, **caractérisé en ce que** le signal de demande de direction de la commande de véhicule autonome et/ou du système d'assistance au conducteur est utilisé pour la direction du véhicule s'il a été constaté que l'appareil de direction (102) présente une erreur ou un défaut et ne peut alors pas générer de signal de demande de direction.

6.  Procédé selon la revendication 5, **caractérisé en ce que** le signal de demande de direction est converti au moyen d'un freinage de direction au moins sur l'essieu entraîné (HA).

7.  Procédé selon la revendication 6, **caractérisé en ce que,** lors du freinage de direction de la première roue d'entraînement (98a) et de la seconde roue d'entraînement (98b) de l'essieu entraîné (HA), la roue d'entraînement (98a) qui représente la roue d'entraînement intérieure au virage par rapport au virage du véhicule représenté par le signal de demande de direction, est freinée.

8.  Procédé selon la revendication 7, **caractérisé en ce que,** lors du freinage de direction, la roue d'entraînement (98b) extérieure au virage, différente de la roue d'entraînement intérieure au virage (98a), n'est pas freinée.

9.  Procédé selon l'une quelconque des revendications précédentes, **caractérisé en ce qu'**un système de freinage électropneumatique et à régulation électronique (1) est utilisé en tant qu'appareil de freinage avec un module de régulation de pression à 2 canaux (16) et/ou avec deux modules de régulation de pression à 1 canal, un premier module de régulation de pression à 1 canal et un second module de régulation de pression, sur le au moins un essieu entraîné (HA), dans lequel une première pression de freinage pour le premier actionneur de frein (50a) peut être réglée individuellement par l'intermédiaire d'un premier canal du module de régulation de pression à 2 canaux (16) ou du premier module de régulation de pression à 1 canal et une seconde pression de freinage pour le second actionneur de frein (50b) peut être réglée individuellement par l'intermédiaire d'un second canal du module de régulation de pression à 2 canaux (16) ou du second module de régulation de pression à 1 canal.

10. Procédé selon l'une quelconque des revendications précédentes, **caractérisé en ce que** la régulation antipatinage (ASR) est activée automatiquement lorsqu'un patinage non admissible a été constaté sur la première roue d'entraînement (98a) et/ou sur la seconde roue d'entraînement (98b) du au moins un essieu entraîné (HA).

11. Véhicule, en particulier véhicule tracteur d'une combinaison véhicule tracteur-remorque, avec un système de commande (300) qui est commandé par l'intermédiaire d'un procédé selon l'une quelconque des revendications précédentes.

FIG. 1

FIG. 2

$\Delta F_{Brems,VA}$

β1

$R_{Lenkroll}$

112a

111a

110

106

105

$\Delta F_{Brems,HA}$

98a

a

$\Delta F_{Brems,VA} \bullet R_{Lenkroll}$

β2

110

98b

111b

112b

VA

104

103

α

HA

107

$M_{Brems,\,Gier}$

109

**FIG. 3**

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10029819 C1